# EUROPEAN PATENT APPLICATION

(11) **EP 1 229 088 A1**
(43) Date of publication of application: **07.08.2002**
(21) Application number: 00949996.3
(22) Date of filing: 04.08.2000
(51) Int. Cl.: C09D 11/00, C09D 5/24, C09D 179/02, B43K 8/00

(54) **ELECTRICALLY CONDUCTIVE INK OR PAINT, PROCESS FOR THE PREPARATION THEREOF AND WRITING IMPLEMENTS HAVING THE INK PACKED THEREIN**

(30) Priority: 06.08.1999 JP 22414499
(71) Applicant: Maruai Corporation, Nishiyatsushiro-gun, Yamanashi 409-3601 (JP)
(72) Inventor: KURAMOTO, Noriyuki, Yonezawa-shi, Yamagata 992-0062 (JP); NAKAMURA, Noriko, Nishiyatsushiro-gun, Yamanashi 409-3601 (JP)
(74) Representative: Calamita, Roberto
(86) International application number: JP0005240
(87) International publication number: WO0110962

(57) **Abstract**

As a method for the preparation of an electroconductive ink or an electroconductive paint, useful for an inexpensive, highly reliable and easy method of conduction without impairing the characteristics of the substrate, a method comprising:
(a) a step of polymerizing aniline or aniline derivative under the presence of a surfactant in an aqueous solvent using a chemical oxidizing agent, thereby obtaining a polyaniline polymer;
(b) a step of aggregating the polyaniline polymer by adding an amphoteric solvent to the oxidative polymerization reaction solution, thereby separating any liquid component;
(c) a step of adding an amphoteric solvent having a higher affinity to the polyaniline polymer than water and a synthetic resin solution, thereby forming a solid component comprising the polyaniline polymer and the synthetic resin, and removing the liquid component containing water from the solid component; and
(d) a step of dispersing the solid component in a synthetic resin solution is provided.

## Description

### Technical Field

The invention of the present application relates to a method for the preparation of an electroconductive ink or an electroconductive paint. More specifically, it relates to an electroconductive ink or an electroconductive paint obtained by the method, as well as a writing instrument having the same packed therein.

### Background Art

In the field of electronics, to apply grounding wires or electroconductivity on substrates and electronic parts, a method of wiring conductors has been generally adopted. Further, as special methods, the method of depositing on a target position, metal fibers, electroconductive paste with metal powder or the like kneaded into a resin, metal tape, or electroconductive rubber with carbon powder kneaded therein, have been known. Further, a method of forming wirings by printing an ink having electroconductivity or dipping into such ink, which may be obtained by kneading a powder of carbon or metal into a resin in the same manner as the electroconductive paste mentioned above has been known.

However, due to the recent development in the field of electronics, the wiring methods described above are causing various problems. For example, the conduction method using conductive wires is poor in operability and not suitable for the fabrication of electronic parts, for which miniaturization and weight saving have progressed rapidly in recent years. Further, the method of using the paste is problematic in that the mechanical strength and the heat resistance of the resin used is insufficient, and that the paste itself is expensive. Further, contamination and decrease of conductivity caused by the falling of the electroconductive particles after coating, unevenness of conductivity caused by nonuniformity of the particles and poor mechanical strength, have made the use of electroconductive ink problematic, as well as the restriction of the coating methods to printing and dipping, which do not allow the deposition of finer circuits required in miniaturization.

On the other hand, in terms of static electricity, which also cause problems in the field of electronics, electroconductive polymers with n electron conjugated system such as polyaniline, polypyrrole and polythiophene, which provide uniform conductivity, have been noted for the prevention of electrostatic charges. However, since most electroconductive polymers are instable in air, and are generally insoluble or infusible, the use of such polymers has been considered impractical. Under such situations, it has been found that doped polyaniline polymers are stable in air and methods of solubilizing the polymer have been proposed.

As soluble polyaniline polymers, those obtained by incorporating surfactants as the dopant, those having surfactant structures or those synthesized from surfactants and aniline salts have been reported. Among them, polyaniline and polyaniline derivatives formed by the oxidative polymerization of aniline or its derivatives with a chemical oxidizing agent under the presence of a surfactant and made soluble in water and/or organic solvents have been known as being stable and readily obtainable (Japanese Patent Preliminary Publication No. 279584/1994) However, in such production method of polyaniline polymers, the water used as the solvent could not be removed completely and the remaining water caused the dispersibility of the polymer to the ink binder resin during the preparation of the ink or paint to worsen, leading to the formation of emulsified two layers or inhomogeneous states.

The invention of the present application has been accomplished in view of the situations described above, for overcoming the problems of the prior art and its object is to provide a method for the preparation of an electroconductive ink or an electroconductive paint, which enables the complete separation of water, in order to obtain an inexpensive, highly reliable and easy method of conduction without impairing the characteristics of the substrate. Further, another object of the present invention is to provide an electroconductive ink or an electroconductive paint wherein a polyaniline polymer is dispersed in a synthetic resin solution.

### Disclosure of the Invention

The invention of the present application has been accomplished in view of the foregoing situations and overcomes the problems of the prior art by providing the following inventions.

That is, the invention of the present application firstly provides a method for the preparation of an electroconductive ink or an electroconductive paint, comprising:
(a) a step of polymerizing aniline or aniline derivative under the presence of a surfactant in an aqueous solvent using a chemical oxidizing agent, thereby obtaining a polyaniline polymer;
(b) a step of aggregating the polyaniline polymer by adding an amphoteric solvent to the oxidative polymerization reaction solution, thereby separating any liquid component;
(c) a step of adding an amphoteric solvent having a higher affinity to the polyaniline polymer than water and a synthetic resin solution, thereby forming a solid component comprising the polyaniline polymer and the synthetic resin, and removing the liquid component containing water from the solid component; and
(d) a step of dispersing the solid component in a synthetic resin solution.

Secondly, the invention of the present application provides an electroconductive ink or an electroconductive paint produced by the method described above.

The invention of the present application provides the above electroconductive ink or electroconductive paint with the embodiments of: thirdly, a water content of 1 wt% or less, fourthly, a concentration of solid component of 10 to 60 wt% and, fifthly, a concentration of solid component of 90 wt% or more.

Sixthly, the invention of the present application also provides an electroconductive ink or an electroconductive paint consisting essentially of a polyaniline polymer, having a water content of 1 wt% or less.

Seventhly, the invention of the present application provides an electroconductive coating film obtained by coating any one of the above electroconductive ink or electroconductive paint, and eighthly, an electroconductive composite material obtained by printing, coating on, or dipping into the above electroconductive ink or electroconductive paint, a synthetic resin, a film, a paper, a printed substrate or a fiber.

Ninthly, the invention of the present application provides a writing instrument having any one of the above electroconductive ink or electroconductive paint packed therein.

Further, the invention of the present application provides the above instrument of: tenthly, comprising a packing portion in which the electroconductive ink or electroconductive paint is packed; and a discharging portion from which the electroconductive ink (or the electroconductive paint) is discharged, eleventhly, comprising a packing portion in which the electroconductive ink or electroconductive paint is packed; a pump portion; and a discharging portion from which the electroconductive ink or the electroconductive paint is discharged, twelfthly, wherein the pump portion comprises a structure which connects the discharging portion and the packing portion when pressure is applied on a pen tip operating as the discharging portion.

Then, the invention of the present application provides, as embodiments, any one of the above instruments comprising:
thirteenthly, a felt-like axial core that is in contact with the packing portion and the discharging portion and, fourteenthly, the instrument, wherein the packing portion contains an absorbent to which the electroconductive ink or electroconductive paint is infiltrated, and the electroconductive ink or electroconductive paint reaches the pen tip by capillary action through the felt-like axial core.

### Brief Description of Drawings

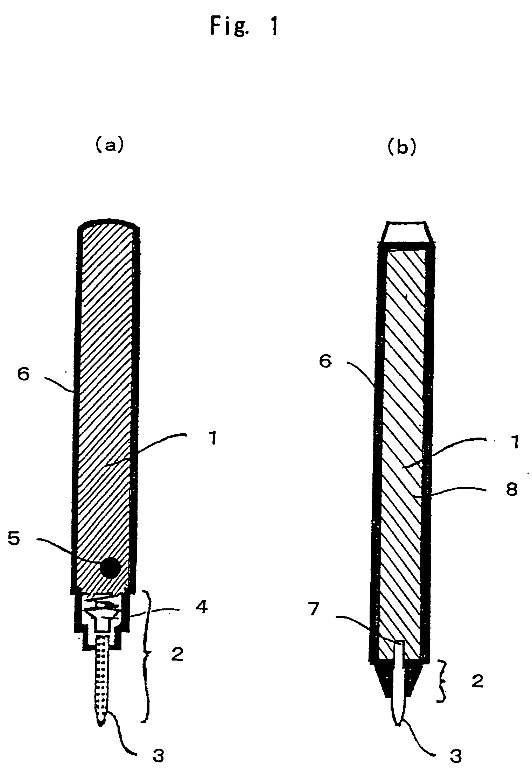

Fig. 1 shows an example of the instrument of the present invention. (a) is a skeletal frame view exemplifying the instrument of the inventions of claims 8 to 11; (b) is a skeletal frame view exemplifying the instrument of claims 12 to 13 of the present application (1: ink packing portion, 2: ink discharging portion, 3: pen tip, 4: pump portion, 5: stirrer, 6: pen holder, 7: felt-like axial core, 8: absorbent)

### Best Mode for Carrying Out the Invention

The inventions of the present application have the features as described above; hereinafter, embodiments thereof are discussed.

First, the invention of this application provides a method for the preparation of an electroconductive ink or an electroconductive paint, which comprises
(a) a step of polymerizing aniline or aniline derivative under the presence of a surfactant in an aqueous solvent using a chemical oxidizing agent, thereby obtaining a polyaniline polymer;
(b) a step of aggregating the formed polyaniline polymer by adding an amphoteric solvent to the oxidative polymerization reaction solution to free itself from the liquid component,
(c) a step of adding an amphoteric solvent having a higher affinity to the polyaniline polymer than water and a synthetic resin solution, thereby forming a solid component comprising the polyaniline polymer and the synthetic resin, and removing the liquid component containing water from the solid component; and
(d) a step of dispersing the solid component in a synthetic resin solution.

However, the method according to the invention of the present application is not limited to the method consisting of steps (a) to (d) and may include, for example, a cleaning step following the above step (b)

The surfactant used in step (a) is not restricted to a particular type, and anionic surfactants, cationic surfactants or neutral surfactants may be used. To obtain a higher solubility, long chained alkylbenzene sulfonic acid such as dodecylbenzene sulfonic acid are preferably used.

Anilines used in step (a) may generally be those that form linear polymers with head to tail bonding at the para-positions by polymerization; they may also have an amine structure with the nitrogen atom reduced, an oxidized imine structure, or such structures with protons added. In the present method, any of the above-described anilines may be used. For the aniline derivatives, N-alkylaniline, N,N-dimethylaniline, 1-aminopyrene and o-phenylenediamine may be listed as examples; they are, however, not restricted to them.

In the method of the present invention, any chemical oxidizing agent may be used in step (a) including oxidizing agents such as ammonium persulfate, aqueous hydrogen peroxide and iron (III) chloride, of which ammonium persulfate is preferable in view of the cost and easy handling.

Further, as the aqueous solvent, water, organic solvents, and mixtures thereof may be used; however, preferably, water is used in view of the cost and easy handling.

The amphoteric solvent added in step (b), refers to a solvent that mixes with both organic solvents and water; specific examples are acetone, methanol or ethylcellosolve.

On the other hand, there is no particular restriction on the amphoteric solvent used in step (c) so long as it shows higher affinity to the polyaniline than water does. For example, dimethylformamide, methanol and dimethylsulfoxide are included.

Further, the synthetic resin added in steps (c) and (d) are used as ink binders and the types of resin applicable are not particularly restricted; they may be selected from acrylic resins, methacrylic resins, polyester resins, polyurethane resins, polyimide resins, polyvinyl resins and cellulose derivatives such as nitrocellulose and casein. The synthetic resins described above may be used singularly or as a mixture of two or more resins in accordance with various conditions such as substrate material and electroconductive component. In the method of the present invention, the synthetic resin is dissolved in an organic solvent such as acetone, toluene, ethyl acetate or methyl ethyl ketone to form a synthetic resin solution.

In the method for the preparation of the electroconductive ink (or electroconductive paint) according to the invention of the present application, the method by which the solid component is dispersed into the synthetic resin solution in step (d) is not particularly limited, and a conventional mixing device such as a mixer or a mill may be used; a supersonic homogenizer, compulsory stirrer or a magnetic stirrer may also be used.

During the above step, inorganic pigments such as carbon black or titanium dioxide, quinacridone type pigments such as quinacridone violet, insoluble azo dyes such as Hansa yellow-10G and organic pigments such as phthalocyanine may be added and dispersed as a colorant.

The invention of the present application also provides an electroconductive ink (or electroconductive paint) obtained by the above-described method; however, it is preferable to have the water content of the electroconductive ink (or electroconductive paint) as low as possible. It is particularly preferable to control the water content to 1 wt% or less, more preferably 0.5% or less, to obtain an ink (or paint), which is highly fixable to film. The water content may be controlled depending on its use or target characteristics.

Further, in the electroconductive ink (or electroconductive paint), the concentration of the solid component comprising the synthetic resin and the polyaniline polymer (electroconductive polymer) is not particularly limited. To obtain electroconductive inks (or paints) of an oily type, an aqueous type or a UV/electron beam drying type, suitable for coating by gravure printing, flexographic printing, dipping or coating by a coater or spray, the concentration of the solid component may preferably be 10 to 60 wt% based on the entire amount of ink (or paint) or more preferably, 20 to 40 wt%. Generally, no stable coating film is obtained when the solid component is less than 10 wt% and the fluidity of the ink is lost when it is 60 wt% or more. However, when the solid concentration is further increased to 90 wt% or more, electroconductive ink or paint of oily type, aqueous type, UV or electron beam drying type suitable for offset printing or silk screen printing may be obtained.

In the electroconductive ink (or electroconductive paint) of the present invention, the content of polyaniline in the solid component is not particularly restricted; it is preferably 1 to 50 wt% based on the entire amount of the solid content. If the content is less than 1 wt%, the surface resistivity of the coating film becomes 10¹⁰ Ω/square or more, and sufficient effect for grounding wire or conductive treatment may not be obtained. When it is 50 wt% or more, sufficient strength of the coating film such as wear resistance, peeling resistance and heat resistance may not be obtained. Accordingly, the polyaniline concentration should preferably be selected from the above range, taking in consideration such properties as the fluidity of the electroconductive ink (or electroconductive paint) or the surface resistance required for the use.

Further, the invention of the present application also provides an electroconductive coating film obtained by coating the above-described electroconductive ink or electroconductive paint. For the coating of the electroconductive ink or the electroconductive paint, any generally practiced method is applicable. Specifically, various printing processes such as brush coating, spin coating, dipping or spraying may be mentioned, but not limited to such conventional methods. The electroconductive coating film according to the invention of the present application is preferred since impurities such as acidic ingredients do not leach out and corrosion and contamination may be suppressed and prevented.

Further, the invention of the present application also provides an electroconductive composite material obtained by printing, coating on or dipping into the above-described electroconductive ink or paint, a synthetic resin, a film, paper, a printed substrate or a fiber. In the electroconductive composite material described above, there is no particular restriction on the method and the conditions for printing, coating and dipping, and the thickness of the electroconductive layer and the number of the layers may be controlled by varying the concentration of the paint, the number of coating cycles or the dipping time as required.

The invention of the present application also provides an instrument in which the electroconductive ink or paint is packed. This enables the application of grounding wire or electroconductive treatment in any substrate or electronic parts by incorporating the electroconductive ink in the form of an instrument.

The instrument may include, for example, those generally referred to as a pen, a fountain pen and a marker, and there is no restriction to its size, diameter, length or shape. The method of packing the instrument is not limited, as long as it contains the electroconductive ink or electroconductive paint of the present invention packed therein. The electroconductive ink or the electroconductive paint of the present invention may be packed by, for example, sucking from the pen tip, dripping from above the pen holder, or injecting and mounting a cartridge. The instrument should at least have, as shown in Fig. 1 (a) an electroconductive ink (or electroconductive paint) packing portion (1) and a discharging portion (2), or it may have a packing portion (1), a discharging portion (2) and a pump portion (4) for the electroconductive ink or electroconductive paint. Further, the pump portion may have a structure that connects the discharging portion (2) and the packing portion (1) when pressure is applied on the pen tip (3).

Further, the instrument according to the present invention preferably has a stirrer (5) for uniformly stirring the electroconductive ink or electroconductive paint packed inside the instrument. As the stirrer (5), a ball or a chip with a diameter smaller than the inner diameter of the packing portion is preferred. The specific shape is not particularly limited and may be of sphere, stud, plate or any other random shape. Further, there is also no restriction on the material of the stirrer (5) but materials having high durability to the organic solvents used in the electroconductive ink or electroconductive paint are preferred. Furthermore, the stirrer is preferably made of a material with a specific gravity higher than that of the electroconductive ink or electroconductive paint for the stirring to occur successfully by shaking the instrument.

The instrument of the invention of the present application may also have a structure that is generally referred to as a felt-tip pen as shown in Fig. 1(b). It may be of a structure at least having an electroconductive ink (or electroconductive paint) packing portion (1), a discharging portion (2) and a felt-like axial core (7); in such case, the electroconductive ink (or electroconductive paint) is infiltrated in the absorbent (8) in the packing portion prior to use and the electroconductive ink (or electroconductive paint) penetrates through the felt-like axial core (7) by capillary action and reaches the pen tip (3).

In the instrument described above, the absorbent may be of any material; it may be selected from natural fibers, synthetic fibers such as polyester, natural product such as sponge and spongy or foam-like polymeric material, so long as it may easily absorb the electroconductive ink or the electroconductive paint of the present invention, but is not particularly limited to the above.

Further, in the instrument according to the present invention, there is no particular restriction on the type of material, hardness, shape and size of the felt-like axial core so long as the electroconductive ink (or paint) can be infiltrated, and penetrate by way of the capillary action to reach the pen tip.

In the above-described instrument of the present invention, the ink packing portion may further be covered with a pen holder (Fig. 1(6)); in such case, the electroconductive ink or the electroconductive paint may be coated by gripping the pen holder portion or by attaching the pen holder portion to a device. Further, in the instrument according to the invention of the present application, the inside of the pen holder may directly form the electroconductive ink packing portion, or an electroconductive ink packing portion may further be incorporated in the pen holder.

The material for the packing portion and the pen holder portion of the instrument may include, for example, resins such as polyethylene, polypropylene, polyester, polystyrene and ABS resin and, in addition, metals such as aluminum. It may be selected in accordance with the resin and the solvent used for the ink, the shape of the pen and the shape of the device to which the pen is attached on.

It should be apparent that the instrument according to the present invention is not restricted to the embodiments exemplified above. Further, the instrument may also be used incorporated singularly or in plurality to an automatic assembling apparatus for electronic parts and the like.

There is no restriction on the viscosity or the solid concentration of the electroconductive ink or electroconductive paint to be packed in the instrument and the composition may be modified using solvents or the fillers for an easier transcription or concentrated for certain purposes.

Hereinafter, examples are shown with reference to the drawings and embodiments of the invention are further described in detail. It should be apparent that the invention is not restricted to the following examples and that various modes are possible.

### Example

### <Example 1>

### Step (a) : Synthesis of Soluble Polyaniline

1 mol of aniline, 1 mol of dodecyl benzene sulfonic acid and 4,000 ml of distilled water were mixed and stirred while cooling at 5°C or lower, to which 1000 ml of an aqueous solution of 1.25 mol ammonium persulfate was added to start the reaction. The reaction solution was left for 12 hours or more to complete the reaction.

### Step (b) : Aggregation of Polyaniline

Acetone was added to the polyaniline polymer solution, to obtain precipitates of soluble polyaniline. The precipitates were washed twice with a mixed solvent of acetone/water.

### Step (c) : Removal of Water Content from the Solid

1000 ml of dimethyl formamide and 300 g of an acrylic resin solution (10 wt% of acrylic resin, 90 wt% of toluene/ethyl acetate/methyl ethyl ketone mixed solvent) were added to 1000 ml of the resultant polyaniline to remove the liquid ingredient containing water from the solid component comprising polyaniline and acrylic resin.

### Step (d) : Dispersion of solid Component into Synthetic Resin Solution

10 wt% of the solid comprising polyaniline and acrylic resin was mixed with 10 wt% of an acrylic resin and 80 wt% of a mixed solvent mainly comprising toluene/ethyl acetate and dispersed using a sand mill.

The water content of the ink was measured by a Karl-Fisher water content measuring instrument. Further, the ink was extracted with ethyl acetate/water and the aqueous phase was analyzed using ion chromatography.

The resultant ink was printed on polyester resin using a gravure-printing machine and the surface resistance value was measured in accordance with JIS K-6911.

### <Example 2>

The same ink was prepared, printed and evaluated as in Example 1, but without conducting the cleaning step.

### <Comparative Example 1>

The same ink was prepared, printed and evaluated as in Example 1, but without step (c)

### <Comparative Example 2>

The same ink was prepared, printed and evaluated as in Example 1, but without conducting the cleaning step and step (c)

Table 1 shows the result of Examples 1 - 2 and Comparative Examples 1 - 2. For the result of ion chromatography, the detected anions and their amount, as well as the total amount of the anionic surfactant are shown. No other ions were detected.

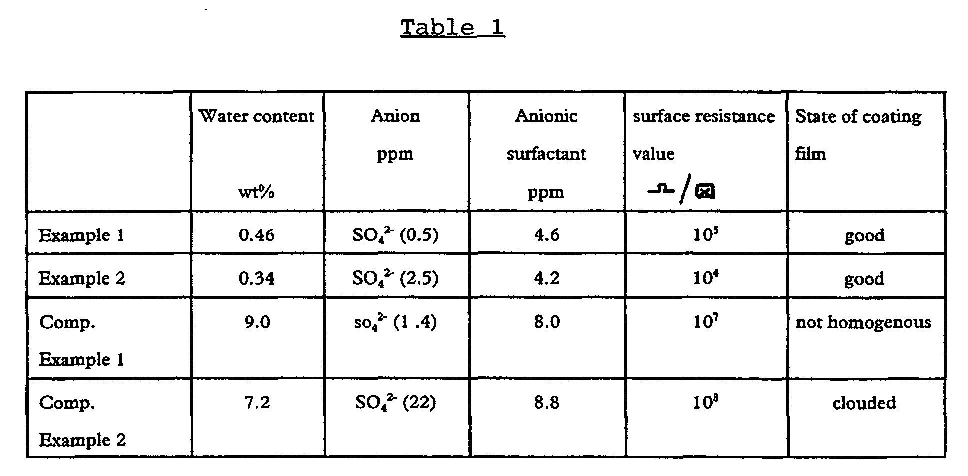

From the foregoing procedures, in the electroconductive ink for which the removal of water was performed in step (c), the water content was 0.5 wt% or lower and low surface resistance value was obtained. Further, the state of the coating films obtained using the electroconductive inks were favorable when step (c) was conducted (Examples 1, 2); however, non-homogeneous coating films and coating films with clouding were formed from the ink with high water content, prepared without conducting step (c) (Comparative Examples 1, 2)

### Industrial Applicability

As has been described above in detail, through the method of the present invention, an electroconductive ink is produced easily and inexpensively. Further, an electroconductive coating film with low surface resistance and favorable surface appearance may be obtained upon printing, using the electroconductive ink produced by the method of the present invention. Furthermore, application of the electroconductive ink or the electroconductive paint on fine areas, in any desired shape is made simple and convenient by using a writing instrument packed with the obtained ink.

## Claims

1. A method for the preparation of an electroconductive ink or an electroconductive paint, comprising:
(a) a step of polymerizing aniline or aniline derivative under the presence of a surfactant in an aqueous solvent using a chemical oxidizing agent, thereby obtaining a polyaniline polymer;
(b) a step of aggregating the polyaniline polymer by adding an amphoteric solvent to the oxidative polymerization reaction solution, thereby separating any liquid component;
(c) a step of adding an amphoteric solvent having a higher affinity to the polyaniline polymer than water and a synthetic resin solution, thereby forming a solid component comprising the polyaniline polymer and the synthetic resin, and removing the liquid component containing water from the solid component; and
(d) a step of dispersing the solid component in a synthetic resin solution.

2. An electroconductive ink or an electroconductive paint produced by the method of claim 1.

3. The electroconductive ink or electroconductive paint of claim 2, having a water content of 1 wt% or less.

4. The electroconductive ink or electroconductive paint of claims 2 or 3, having a concentration of solid component of 10 to 60 wt%.

5. The electroconductive ink or electroconductive paint of claims 2 or 3, having a concentration of solid component of 90 wt% or more.

6. An electroconductive ink or an electroconductive paint consisting essentially of a polyaniline polymer, and having a water content of 1 wt% or less.

7. An electroconductive coating film obtained by coating the electroconductive ink or electroconductive paint of any one of claims 2 to 6.

8. An electroconductive composite material obtained by printing, coating on or dipping into the electroconductive ink or electroconductive paint of any one of claims 2 to 6, a synthetic resin, a film, a paper, a printed substrate or a fiber.

9. A writing instrument having the electroconductive ink or electroconductive paint of any one of claims 2 to 6 packed therein.

10. The instrument of claim 9 comprising:
a packing portion in which the electroconductive ink or electroconductive paint is packed; and
a discharging portion from which the electroconductive ink or the electroconductive paint is discharged.

11. The instrument of claim 9 or 10 comprising:
a packing portion in which the electroconductive ink or electroconductive paint is packed;
a pump portion; and
a discharging portion from which the electroconductive ink or the electroconductive paint is discharged.

12. The instrument of claim 11, wherein the pump portion comprises a structure that connects the discharging portion and the packing portion when pressure is applied on a pen tip operating as the discharging portion.

13. The instrument of claim 9 or 10 further comprising a felt-like axial core that is in contact with the packing portion and the discharging portion.

14. The instrument of claim 13, wherein the packing portion contains an absorbent to which the electroconductive ink or electroconductive paint is infiltrated, and the electroconductive ink or electroconductive paint reaches the pen tip by capillary action through the felt-like axial core.
